**Europäisches Patentamt**

**European Patent Office**

**Office européen des brevets**

(11) Publication number: **0 061 279**
**A2**

(12) # EUROPEAN PATENT APPLICATION

(21) Application number: **82301312.3**

(22) Date of filing: **15.03.82**

(51) Int. Cl.³: **A 01 K 11/00**

(30) Priority: **16.03.81 IE 576/81**
**16.04.81 IE 889/81**
**13.11.81 IE 2663/81**

(43) Date of publication of application:
**29.09.82 Bulletin 82/39**

(84) Designated Contracting States:
**AT BE CH DE FR GB IT LI LU NL SE**

(71) Applicant: **Stafford, Rodney Arthur**
**57 Bushy Park Road**
**Dublin 6(IE)**

(71) Applicant: **Kilroy, Michael Maxwell**
**Castlecor**
**Oldcastle Meath(IE)**

(72) Inventor: **Stafford, Rodney Arthur**
**57 Bushy Park Road**
**Dublin 6(IE)**

(72) Inventor: **Kilroy, Michael Maxwell**
**Castlecor**
**Oldcastle County Meath(IE)**

(72) Inventor: **Neutsch, Karl-Heinz**
**Höfen 82a**
**D-5600 Wuppertal(DE)**

(74) Representative: **Jennings, Roy Alfred et al,**
**GILL, JENNINGS & EVERY 53/64 Chancery Lane**
**London WC2A 1HN(GB)**

(54) Improvements in or relating to tags.

(57) A tag particularly a brass ear tag for marking animals such as cattle which have passed an official test comprises a strip (1) formed into two limbs (2,3) and a hollow rivet (5) standing up at the free end of one of the limbs (2), the rivet comprising a stock portion (6) and a head portion (8) with a weak portion (7) of reduced wall thickness therebetween, and a receiver hole (17) through the strip near to the free end of the second of said limbs (3), the receiver hole being of sufficient diameter to receive the head portion of the rivet when the tag is being closed, the head portion (8) being deformed radially outwardly to a splayed configuration after passage through the receiver hole (17), and the metal of the strip which defines the receiver hole being a hardened zone (83, 84) which is adapted to interact with the splayed rivet (5) to cause it to break at the weak portion (7) if an attempt is made to force the limbs (2, 3) of the tag apart after it has been closed. The hardening of the zone (83) around the receiver hole (17) has been effected by working the brass. A zone of the strip surrounding the receiver hole (17) is shaped as a raised annular rim (83) adapted to shelter the splayed head (8) of the rivet in the closed configuration of the tag, the raised rim (83) being provided by deforming and thereby hardening the metal of the strip. The rivet (5) may be a separate component from the strip (1) or may be formed from the material of the strip. An insert for a tagging tool is also described.

./...

Croydon Printing Company Ltd.

Fig.2.

- 1 -

## Improvements in or relating to tags

This invention relates to tags, especially marker tags for livestock,
more particularly "tamper-proof" ear tags, and concerns an improvement
in or modification of the invention of our cognate Irish Patent Applications Nos. 255/79, 491/79, 1738/79 and 2336/79 (European Patent Publication No. 0 014 584 A/2) hereafter called "the parent application".

In said parent application, we have claimed a tag comprising a strip
formed into two limbs and a hollow rivet standing up at the free end
of one of the limbs, said rivet comprising a stock portion surmounted
by a narrower neck portion surmounted by an enlarged head portion, a
receiver hole through the strip near to the free end of the second of
said limbs, the receiver hole being of greater diameter than the external diameter of the head portion of the rivet, wherein a spring
clip is secured over the receiver hole and coaxial therewith, the clip
being adapted to allow the head portion of the rivet to be forceably
passed through it to close the tag and being then adapted to interact
with the rivet to cause it to break at the neck portion if an attempt
is made to force the limbs apart, the rivet being of reduced wall
thickness at the neck portion as compared to the stock portion or head
portion.  In the preferred embodiments described therein, the head
portion is deformable radially outwardly after it has been passed
through the spring clip.

The preferred tags described in the said parent application are made of brass but the specification states that alternatively the whole of the strip, incorporating the spring clip as an integral part thereof, may be made of stainless steel, the spring clip area being hardened while the main part of the strip remains relatively soft.

It has been found that a spring clip is not necessary and that a satisfactory interaction between the strip and the rivet can be obtained if the metal defining the receiver hole is hardened.

Therefore the present invention provides a tag comprising a metal strip formed into two limbs and a hollow rivet standing up at the free end of one of the limbs, said rivet comprising a stock portion and a head portion with a weak portion of reduced wall thickness therebetween, and a receiver hole through the strip near to the free end of the second of said limbs, the receiver hole being of sufficient diameter to receive the head portion of the rivet when the tag is being closed, the head portion being deformable radially outwardly to a splayed configuration after passage through the receiver hole, and the metal of the strip which defines the receiver hole being a hardened zone which is adapted to interact with the splayed rivet to cause it to break at the weak portion if an attempt is made to force the limbs of the tag apart after it has been closed.

The omission of the spring clip leads to substantial economies in production, not only because the steps of making the spring clip and securing it in the strip are unnecessary, but also because the strip itself can be thinner when it is not necessary to accommodate a spring clip in a recess in the strip or to provide a rib to retain it.

In a preferred embodiment, the tag is of relatively soft metal and the hardening of the zone around the receiver hole is effected by working the metal. This is advantageous because it means that the tag can all be made from the most suitable material and the hardening can be achieved during some other step in manufacture, particularly during cold-working such as stamping to form the receiver hole and/or shaping of an annulus (with or without a raised rim) around it or a raised rim.

The hardened annulus around the receiver hole has a similar effect to a steel spring clip i.e. it is harder than the neck portion of the rivet which is soft relative thereto. Due to the relative weakness of the neck and the interaction of the spring clip or hardened annulus against the soft neck portion, the head portion tends to break off from the stock portion if an attempt is made to tamper with the tag by forcing the limbs apart. As the wall thickness of the neck portion is at a minimum adjacent to the shoulder, fracture will usually occur at this point, leaving no appreciable fragment of the neck which could be used in an attempt to re-use the tag.

The rivet and the strip are preferably made of a cold-workable metal alloy, particularly a relatively soft metal, such as brass. The strip preferably has a hardness in the range 100 - 115 Brunel (or ½ - ¾ hard), particularly in the range 105 - 110 Brunel. Preferably the zone around the receiver hole is hardened to about 120 Brunel. The rivet is preferably leaded brass.

In the tag illustrated in our above-mentioned parent application, the splayed head of the rivet protrudes upwardly from the second limb when the tag is closed. However the head may therefore be vulnerable to damage or to tampering which is not immediately apparent without close inspection of the tag.

According to one aspect of the present invention, in a tag as described above, a zone of the strip surrounding the receiver hole is shaped as a raised annular rim adapted to shelter the splayed head of the rivet in the closed configuration of the tag, the raised rim being provided by deforming and thereby hardening the metal of the strip.

In preferred embodiments in the parent application, we have described a rivet in which the main part of the stock portion has a frusto-conical external surface which tapers upwardly.

In one form as described, this rivet is made from a brass cylinder which has been turned to shape the surface but retaining the cylindrical passage on the axis of the rivet. The bottom end of the stock portion is of reduced external diameter where it enters a mounting hole in the strip and the lower extremity of the stock has been outwardly swaged to form an annular flange to retain the rivet in the strip. In another form the rivet has been described as being formed from the metal of the strip by stamping and deforming the metal, in which case the rivet, having a stock portion of frusto-conical exterior and a substantially constant wall thickness, has an interior passage which tapers upwardly.

According to a further aspect, the present invention provides a tag of the kind described above in which the rivet is formed as a separate component from the strip but has a stock portion of frusto-conical exterior and substantially constant wall thickness, the rivet being secured in a mounting hole in the strip which is of substantially the same diameter as the external surface of the base of the stock portion of the rivet . Preferably the mounting hole is defined by a conical wall surface. Preferably the rivet is secured by deforming the external surface of the rivet to form a retaining lip which engages the upper surface of the strip around the mounting hole.

This aspect of the invention leads to economy in the amount of metal used in the formation of the rivet.

The invention is illustrated in the accompanying drawings, in which:

Figure 1 is a vertical sectional view of one embodiment of the invention, showing the tag in the open position;
Figure 2 is similar to Figure 1, but showing the tag in the closed position;
Figures 3 and 4 are plan views corresponding to Figures 1 and 2 respectively;
Figure 5 is a vertical sectional view of an embodiment similar to that of Figure 1 in the closed position in a tagging tool (shown in part);
Figure 6 is a plan view of a deforming insert for a tagging tool as shown in Figure 5;
Figure 7 is a view similar to Figure 1, for a second embodiment of the invention;

Figure 8 is a view similar to Figure 2, for the second embodiment;

Figure 9 shows the embodiment of Figures 7 and 8 in the closed position in a tagging tool;

Figure 10 is a vertical sectional view of part of a third embodiment of the invention, showing a portion of the tag in the open position;

Figure 11 is a vertical sectional view of the third embodiment of the invention, showing the tag in the closed position;

Figure 12 is a vertical sectional view showing a fourth embodiment in the open position;

Figure 13 is similar to Figure 12 but showing the tag in the closed position;   and

Figure 14 is a plan view of the fourth embodiment in the closed position.

The animal's ear is omitted from the drawings for the sake of clarity. The terms "top", "bottom", "upper", "lower", etc. are used herein for descriptive purposes and do not necessarily relate to the positions of the parts of the tag in use.

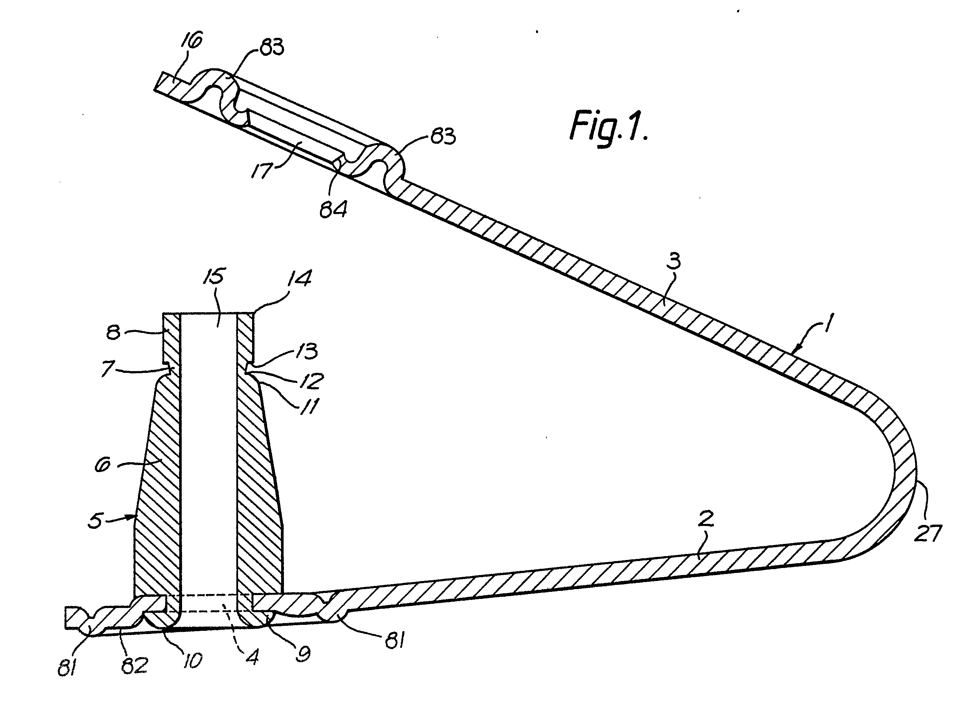

As shown in Fig. 1, an ear tag in accordance with the invention comprises a strip 1 doubled over to form a lower limb 2 and an upper limb 3.  Near to the free end of the lower limb 2 there is a mounting hole 4 in which is secured a hollow rivet 5 comprising a stock 6, a neck or weak portion 7 and a head 8.  The rivet 5 stands up from the lower limb 2 generally at right angles thereto but with a slight inclination towards the closed loop of the strip.

The stock has a lower portion with a cylindrical external surface and a main portion with a frusto conical external surface which tapers upwardly.  The bottom end of the stock is of reduced external diameter where it enters the mounting hole and the lower extremity 9 of the stock is outwardly swaged to form an annular flange 10.  The lower limb 2 is deformed into a shallow annular depressed rim 81 spaced from the mounting hole so as to leave a flat ring-shaped portion 82 onto which an official marking may be impressed.  For example the marking may take the form of the words "Dept. of Agriculture".  The depressed rim protects the flange 10 and ring portion 82 from excessive frictional contact.

At the top of the stock the external surface curves radially inwardly to form a rounded shoulder 11 in the transition to the neck 7 which is of substantially less external diameter than the stock 6. The wall thickness of the neck 7 is at a minimum at weak point 7 adjacent to the rounded shoulder 11 and increases slightly towards the head 8. The head is externally cylindrical with a ledge 13 at its lower edge forming the transition from the neck 7 to the head 8. The external diameter of the head is greater than that of the neck 7 but smaller than that of the stock 6 below the shoulder 11. The free end of the head is formed as an annular punch having a cutting edge 14. The internal diameter of the rivet is constant so that there is a cylindrical passage 15 through the rivet.

At the free end of the upper limb there is a ring-shaped portion 16 containing a receiver hole 17 which comes into alignment with the rivet 5 when the tag is being closed and which is of marginally greater diameter than the external diameter of the head 8 but which is of smaller diameter than the external diameter of the stock 6 below the shoulder 11. The ring-shaped portion 16 is deformed upwardly to create a raised annular rim 83 which surrounds the receiver hole. The rim 83 in cross section (as seen in the drawings) has a curved apex and on its inward side has an S-configuration so that the central annulus 84 defining the receiver hole 17 is sloping upwardly.

The raised rim 83 and central annulus 84 are harder than the neck 7 of the rivet. When the strip is of brass, the hardening may suitably be effected by mechanical working of the brass during formation of the raised rim and receiver hole. More particularly, the receiver hole and the raised rim may suitably be formed by stamping.

The ring-shaped portion 16 is integral with limb 3 but is joined to the remainder of the limb only by a bridge 25 which is of reduced width as compared to the remainder of the limb.

Both the bottom limb 2 and the top limb 3 have raised longitudinal edges 26 which stand proud of the outer surface of the limb. These raised edges run along both limbs but not around the curved part 27 of the strip. Official markings are impressed into the outer surface of one or both of the limbs and the raised edges serve to protect the markings from abrasion. If an official marking is to be impressed into the surface of one limb only, the raised edges 26 may of course be omitted on the other limb.

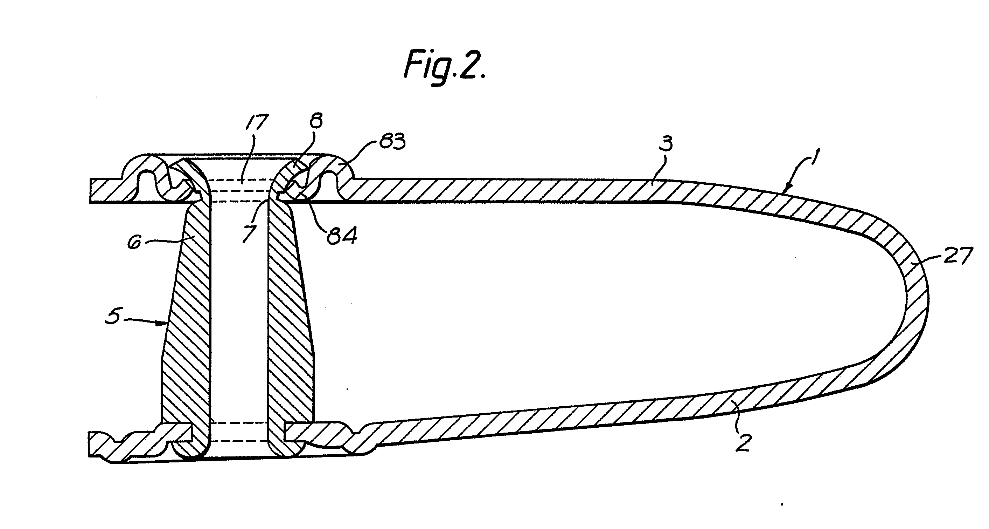

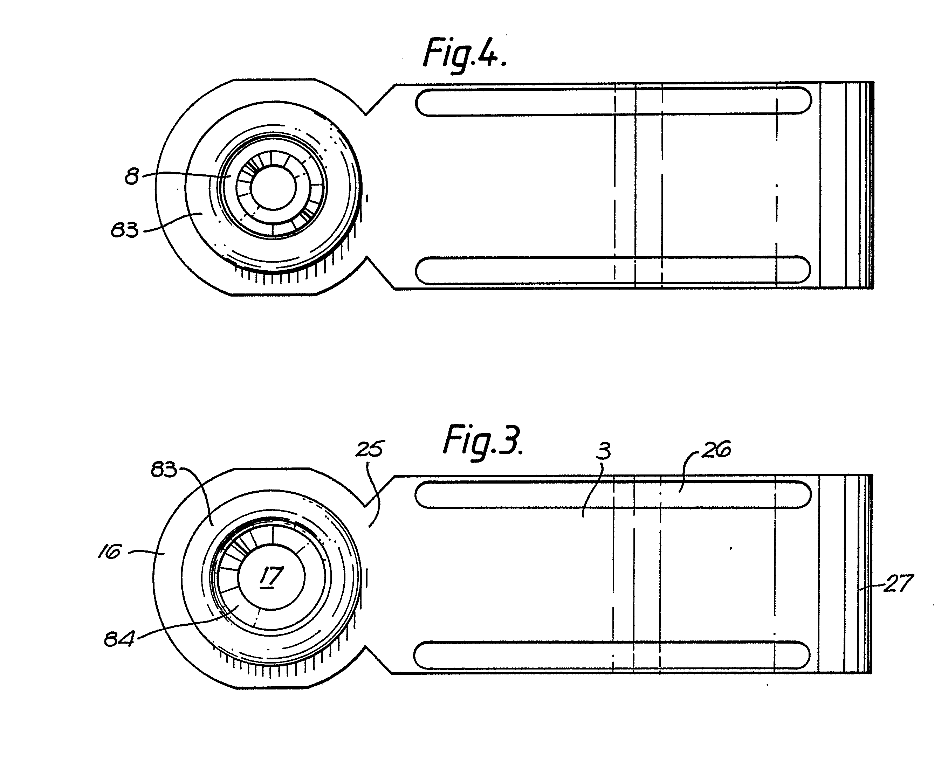

Figures 2 and 4 show the tag in the closed position. The head 8 of of the rivet has passed through the receiver hole 17 and has subsequently been deformed outwardly to a splayed configuration.

The central annulus 84 on the upper limb 3 mates with the shoulder 11. The splayed head 8 has an external diameter which is only slightly less than the internal diameter of the raised rim 83 and it protrudes to a height less than the height of the raised rim so that the raised rim shelters and protects the splayed head.

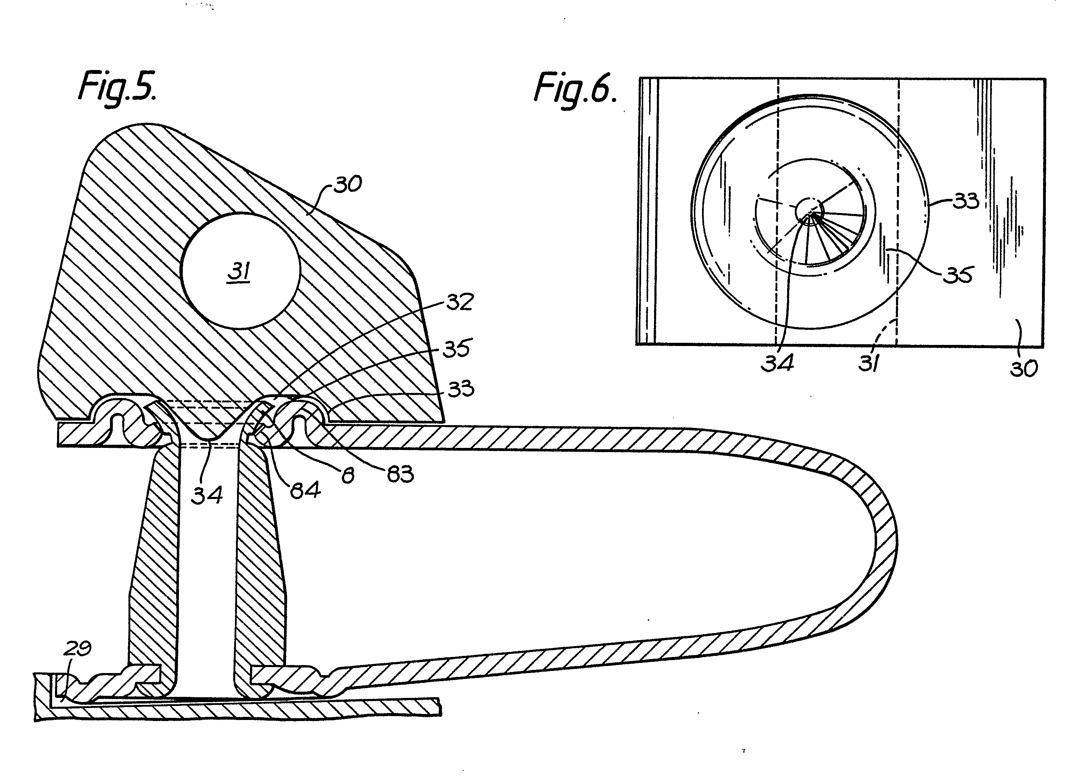

The tag is applied by a tagging tool such as a quick release pliers of the type available from Richard Herberholz KG, Wuppertal, Federal Republic of Germany. As shown in Figure 5, one arm 28 of the pliers is provided with a recess 29 which receives the free end of the lower limb 2. Pivotally mounted in the other (fixed) arm of the pliers is an insert 30 which can pivot through a small arc on a screw passing through a pivot hole 31. The insert 30 has a cylindrical recess 32 surrounded by a wall 33.

Axially disposed in the recess is a conical boss 34 whose apex lies substantially in the same plane as the leading edge of wall 33. The conical boss 34 has a base diameter less than the diameter of the recess so that a trough 35 is formed around the boss (see Figure 6).

When the tag is being applied, an animal's ear is inserted between the top of head 8 and the underside of the top limb 3. As the tagging tool is closed the cutting edge 14 on top of the head 8, interacting with the receiver hole 17 on the upper limb 3, cuts through the ear and cuts out a circle of flesh which is usually discharged through passage 15 along the axis of the rivet. If the fragment of flesh is not discharged, it may be dislodged from the passage by a match-stick or narrow rod or the like at any time when the tag is being inspected.

Because the head 8 has an external diameter which is only marginally smaller than the diameter of the receiver hole 17, the head acts like a paper punch, and tissue and hair are removed, thus avoiding clogging of the tag.

The head 8 passes through receiver hole 17 and, as the tool continues to close, head 8 encounters conical boss 34 and the head is splayed outwardly without splitting. Figure 5 shows the situation when the tool has reached its fully closed position, just before the quick release mechanism operates to open the tool.

Because of the presence of the raised rim 83, the head 8 is protected from damage by abrasion or snagging. Also the raised rim makes it difficult for anyone to tamper with the splayed head by reducing its diameter, because the gap between the splayed head and the raised rim is too small to permit the entry of tools without causing visible damage to the tag.

If an attempt is made to tamper with the tag by forcing the limbs 2 and 3 apart, the domed hardened annulus 84 resists any movement which would cause it to deform downwardly. Due to the relative weakness of the neck 7, and the interaction of the hard annulus 84 against soft brass, the most likely result is that the head will break off from the stock. As the wall thickness of the neck is smallest at point 12 adjacent to shoulder 11, the fracture will usually occur at this point, leaving no appreciable fragment of the neck which could be used in an attempt to re-use the tag.

A suitable tag has a strip 1 made from brass with a hardness of 107 Brunel. Brass, being relatively soft, allows deep embossing of code letters and numbers, which are easy to read, without causing undue wear to the embossing tool and shortening its useful life. The strip 1 is of uniform thickness and it is not necessary to start with a strip of greater thickness and mill it down to form limb portions of lesser thickness and end portions of greater thickness, as are required for the tag of Fig. 1 of the parent application. The raised rim 83 and annulus 84 suitably has a hardeness of about 120 Brunel.

The rivet is suitably turned brass having a hardness such that it cuts the ear of an animal, that it deforms to form a splayed head without splitting and that it breaks at the neck when an attempt is made to force the tag open. A suitable brass is leaded brass (e.g. MS 63 Pb) of rivetting quality. The neck portion may be annealed to weaken it further, if desired.

In the preferred method of manufacturing the tag, the strip 1 is stamped out as a flat strip with the mounting hole 4 cut therein and the receiver hole 17 with the raised rim 83 and central annulus 84 around it formed by the stamping operation.

The bottom of the rivet is inserted through the mounting hole 4 and its lower extremity is outwardly swaged into position. Finally the strip 1 is bent to form the two limbs 2 and 3 joined by the curved portion 27.

In one sample of the preferred embodiment, the strip 1 is 1 mm thick. The receiver hole 17 is 4.2 mm in diameter. The head 8 is 4 mm in external diameter and 2.0 mm high. The neck, which is 1.8 mm high, varies in external diameter from 3.6 mm at point 12 to 3.7 mm adjacent to ledge 13. The internal diameter of the rivet is 3 mm. The external diameter of the stock increases from 5 mm at shoulder 11 to 8 mm at the lower limb 2. The height of the rivet may be varied to suit the average thickness of the ears or other parts of the animals to be tagged.

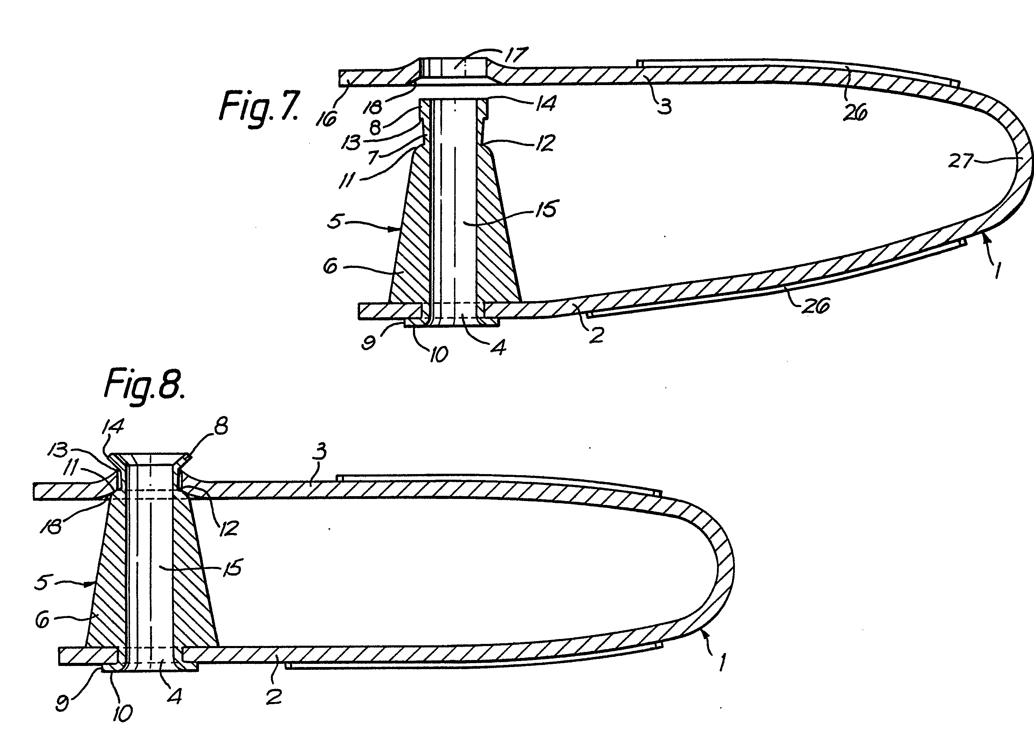

Figures 7 - 9 show an alternative embodiment of the invention which is similar to that of Figures 1 - 6 but which does not have a raised rim around the receiver hole. The ring shaped portion 16 of the upper limb includes a central annulus 18 which slopes upwardly towards the receiver hole 17. The sloping central annulus 18 is hardened so that it is harder than the neck 7 of the rivet. When the strip is of brass, the hardening may suitably be effected by mechanical working of the brass. More particularly the receiver hole and sloping central annulus may suitably be formed by stamping, preferably with a conical stamping tool so that the metal of the strip is redistributed around the receiver hole and any cutting which may be required to form the receiver hole accurately is carried out only after initial stamping and redistribution of the brass.

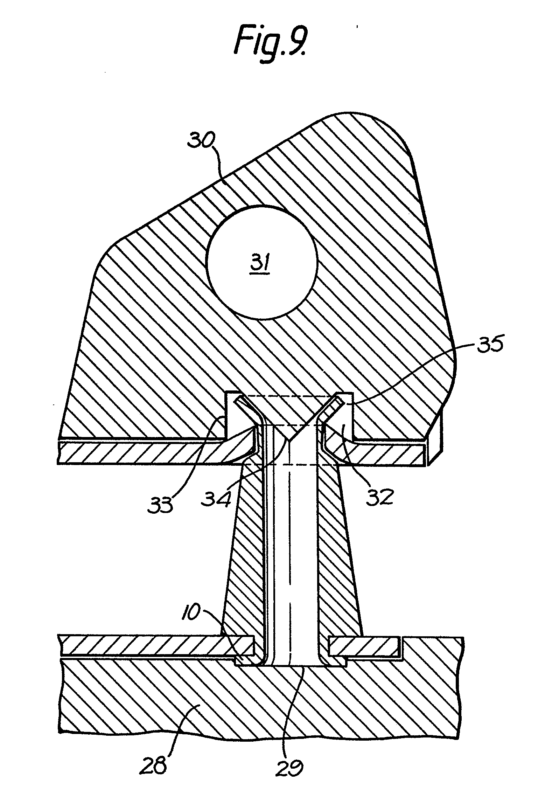

The manner of closing the tag, as shown in Figure 9, is similar to that of Fig. 5.

If an attempt is made to tamper with the closed tag of Figure 8 by forcing limbs 2 and 3 apart the domed hardened annulus 18 resists any movement which would cause it to deform downwardly. Due to the relative weakness of the neck 7, and the interaction of the hard annulus 18 against soft brass, the most likely result is that the head will break off from the stock.As the wall thickness of the neck is smallest at point 12 adjacent to shoulder 11, the fracture will usually occur at this point, leaving no appreciable fragment of the neck which could be used in an attempt to re-use the tag.

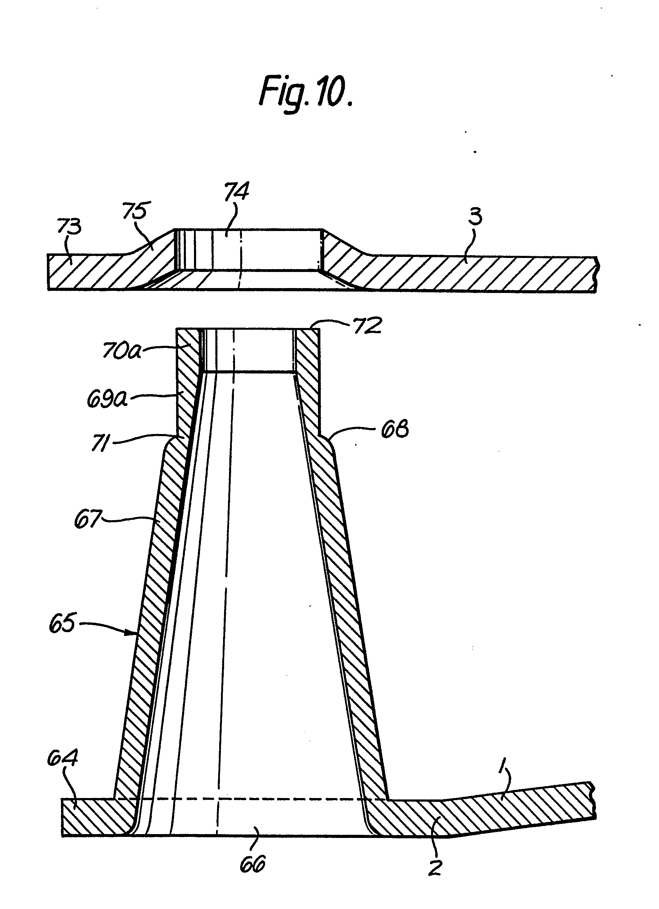

In the third embodiment of the invention, as shown in Figures 10 - 11, a hollow rivet 65 has been formed from the metal of the free end portion 64 of the lower limb by stamping and deforming the metal, for example with a series of forming tools co-operating with a corresponding series of female moulds, each tool deforming the metal progressively until it reaches the shape of the rivet shown in Figure 10. After each deformation, the metal is allowed time to recover before the next stamping operation is carried out. The last male tool has the configuration of the hollow interior of the rivet while the final female mould has the configuration of the exterior of the rivet. It will be noted that the interior of the rivet tapers upwardly so that the final male tool can be withdrawn easily. The area of the lower limb from which the rivet 65 has been formed is left as a mounting hole 66.

The rivet 65 has a stock portion 67 of frusto-conical exterior and a substantially constant wall thickness. At its top end, the stock portion curves radially inwardly to form a rounded shoulder 68 in the transition to a head 70 which is of smaller external diameter than the stock portion 67. The head is externally cylindrical but the upwardly tapering interior surface is continued from the stock portion part of the way up the head so that a neck 69 of reduced wall thickness is formed and the wall thickness is at a minimum at point 71 adjacent to shoulder 68 . The free end of the head is formed as an annular punch having a cutting edge 72. If desired, the free end of the head can be internally chamfered. When the tag is of brass, the rivet may be annealed to soften the brass, particularly in the neck and adjacent to the weak point 71.

At the free end of the upper limb 3 there is a ring-shaped portion 73 (i.e. ring-shaped in the plane perpendicular to the drawing) defining a receiver hole 74 which comes into alignment with the rivet 65 when the tag is being closed and which is of marginally greater diameter than the external diameter of the head 70. The ring-shaped portion 73 includes a central annulus 75 which slopes upwardly towards the receiver hole 74.

The receiver hole and sloping central annulus may suitably be formed by stamping, preferably with a conical stamping tool so that the metal of the strip is redistributed around the receiver hole and is not cut away. When the strip is of brass, the stamping operation hardens the brass by working it mechanically so that an area of increased hardness is formed around the receiver hole.

The ring-shaped portion 73 is integral with limb 3 but is joined to the remainder of the limb only by a bridge which is of reduced width as compared to the remainder of the limb.

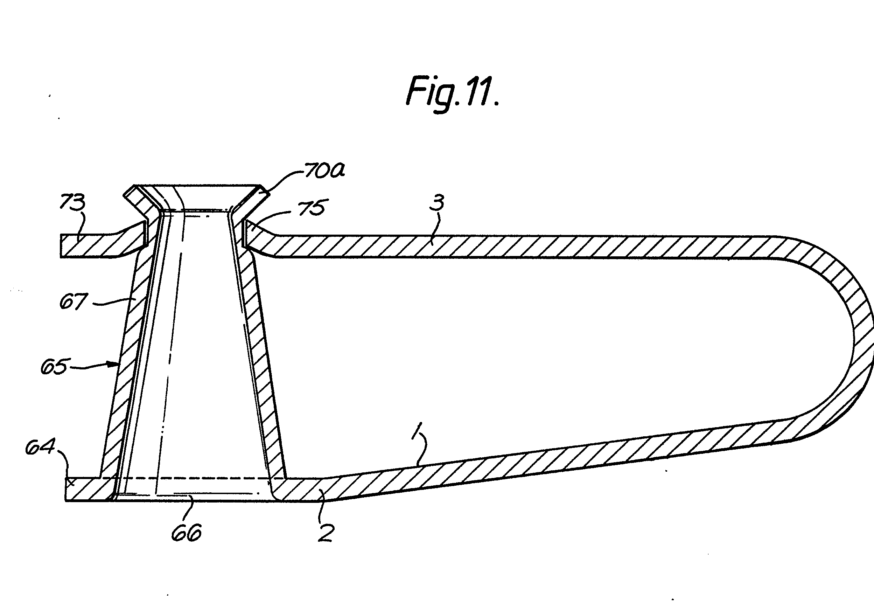

Figure 11 shows the tag in the closed position. The head 70 of the rivet has passed through the receiver hole 74 and has subsequently been deformed outwardly to a splayed configuration. The central annulus 75 of the ring-shaped portion 73 of the upper limb 3 is seated on the shoulder 68 and is trapped below the splayed out portion of the head 70.

The tag is applied by a tagging tool in the same manner as that of Figures 7 - 9.

The tag of Figures 7 - 9 may be modified to incorporate the head and neck of the tag of Figures 10 and 11, or the line of the exterior surface of the neck in the tag of Figures 7 - 9 may be continued upwardly into the head, so that the ledge 13 is omitted.

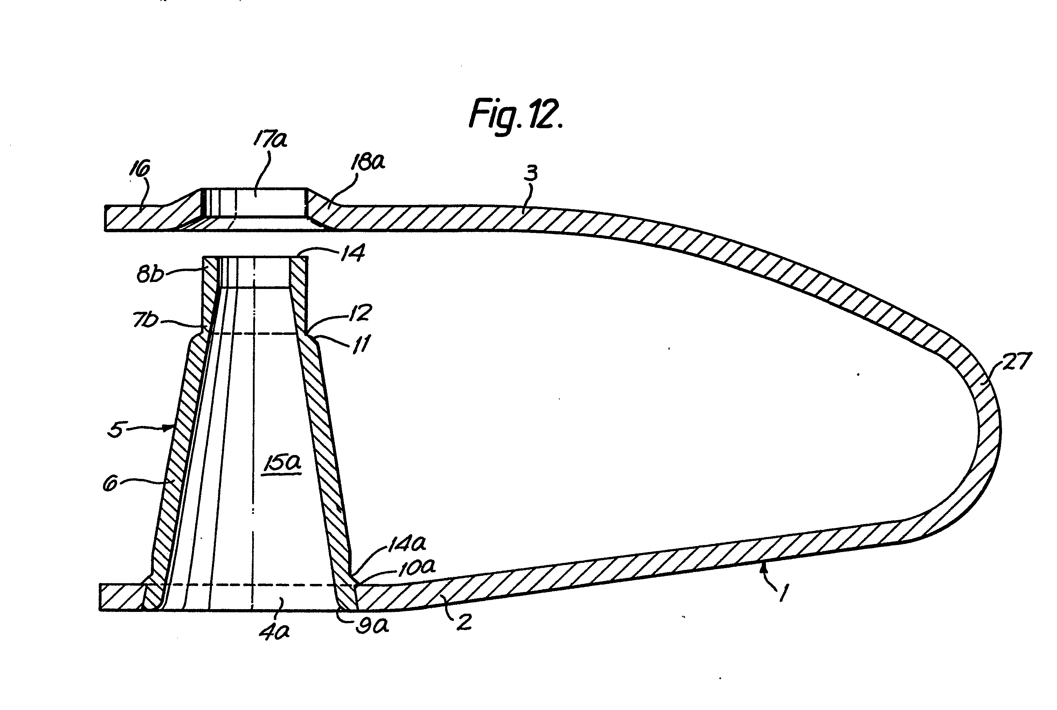

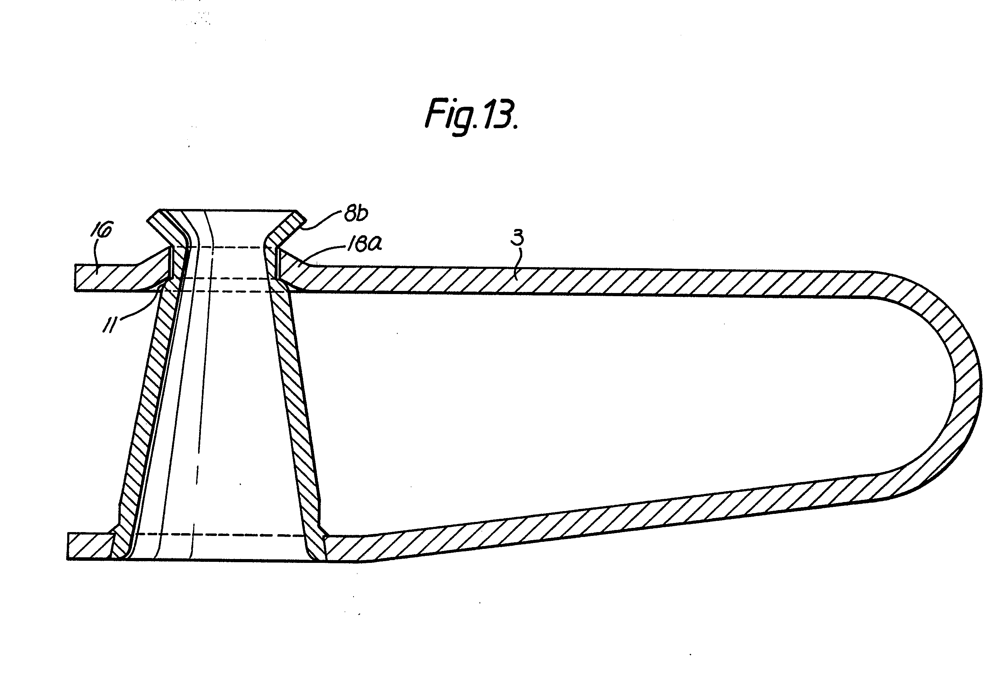

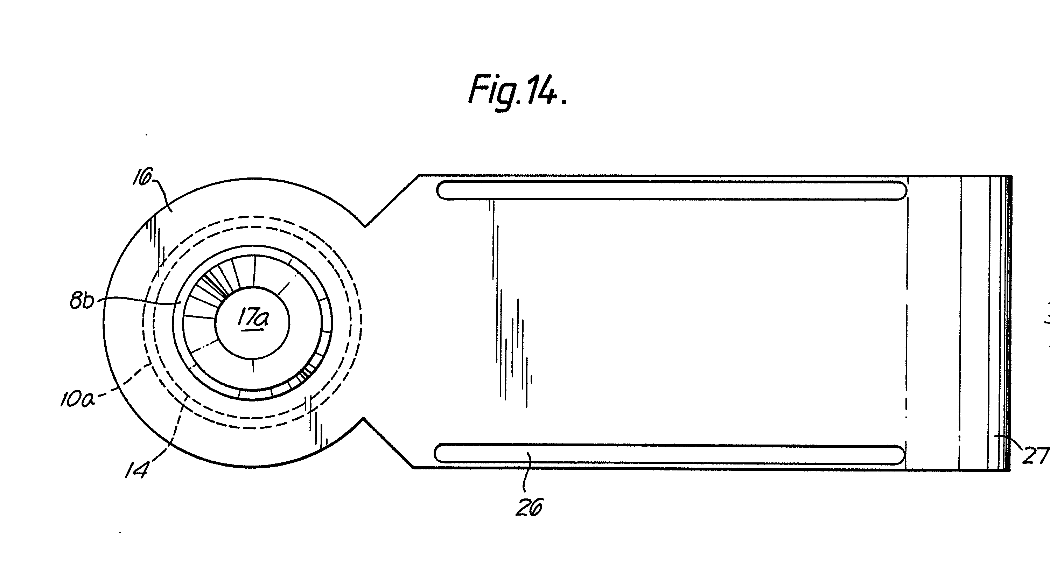

As shown in Figures 12 - 14, an ear tag in accordance with the invention comprises a strip 1 doubled over to form a lower limb 2 and an upper limb 3. Near to the free end of lower limb 2 there is a mounting hole 4a in which is secured a hollow rivet or piercing member 5 comprising a stock and a neck or weak portion 7b and a head 8b. The rivet 5 stands up from the lower limb 2 at right angles thereto.

The main part of the stock portion has a frusto-conical external surface which tapers upwardly. The stock portion is of substantially constant wall thickness so that the interior passage 15a tapers upwardly. The rivet has been formed with a smooth frusto-conical exterior surface, most suitably by deforming a cylindrical blank using one or more conical or frusto-conical mandrels. Conveniently the cylindrical blank may have an initial diameter approximtely equal to the median diameter of the finished rivet, so that the base of the rivet has been formed by expanding the blank while the head of the rivet has been formed by reducing the diameter of the blank.

The mounting hole 4a has an upwardly-converging wall having the same configuration and diameter as the bottom extremity 9a of the rivet. The rivet has been inserted into the mounting hole from below until the conical surface of the bottom extremity 9a of the rivet mates against the wall of the mounting hole, so that no further upward movement of the rivet is possible. A deforming tool is then brought down on the rivet from above to displace part of the external surface of the rivet to form recess 14a and a retaining lip 10a which engages the upper surface of the strip around the mounting hole 4a. This lip prevents the rivet being removed downwardly from the strip. During this deforming step, the rivet is supported internally by a conical or frusto-conical mandrel inserted from the bottom of the rivet. This mandrel also acts against the lower end of the rivet and exerts radially outward pressure on it as the conical mandrel is pushed in the opposite direction to the external deforming tool. This outward pressure ensures secure and even mating of the rivet against the wall of the mounting hole 4a, and it rounds off the bottom extremity 9a of the rivet.

In an alternative procedure, the bottom extremity of the rivet may be swaged outwardly to form a flange below the bottom surface of the strip, which may optionally be rebated to receive the flange.

At the top of the stock the external surface curves radially inwardly to form a rounded shoulder 11 in the transition to a head 8b which is of smaller external diameter than the stock 6. The head is externally cylindrical but the upwardly tapering interior surface is continued from the stock portion part of the way up the head so that a neck 7b of reduced wall thickness is formed and the wall thickness is at a minimum at point 12 adjacent to shoulder 11. The free end of the head is formed as an annular punch having a cutting edge 14. If desired the free end of the head can be internally chamfered.

The remainder of the tag and its manner of use are the same as those of Figures 7 - 11.

When one of the tags according to Figures 7 - 14 is made from brass having a hardness in the range 100 - 115 Brunel (or ½ - ¾ hard) and the zone around the receiver hole is further hardened to the region of 120 Brunel as a result of stamping, the tag has "tamper-proof" qualities comparable to those of our above-mentioned parent application. If an attempt is made to open the tag by forcing the limbs apart, interaction between the hardened brass around the receiver hole and the weak neck of the rivet is most likely to lead to the head breaking off from the stock portion. Due to the domed shape of the annulus around the receiver hole, an attempt to draw the rivet downwards through the receiver hole tends to reduce the diameter of the receiver hole so that it grips the rivet. The fracture of the rivet will usually occur at the weak point adjacent to the shoulder, leaving no appreciable fragment of the neck which could be used in an attempt to re-use the tag.

The frusto-conical shape of the stock portion defeats any attempt to tamper with the tag by sawing through the stock and then fitting a cylindrical sleeve around the stock to conceal the saw cut. The provision of a rivet by deformation of the material of the strip (as in Figures 10 and 11) avoids an assembly step which is necessary in making tags with a separate rivet which has to be secured in the strip. The integral rivet cannot be tampered with at its lower end and there is no danger of a rivet being substituted in an attempt to re-use the tag.

The frusto-conical shape of the stock portion is of particular advantage in the tag of Figures 10 and 11, wherein the rivet is formed from the material of the strip. The base of the frusto-conical shape is of much greater area than the base of a cylinder having the diameter of the shoulder region of the stock portion. Therefore the area of the strip from which the rivet is formed is substantially greater than would be the case if the stock portion were cylindrical. This means that substantially more metal is available for formation of the rivet than would be available if an attempt were made to form a cylindrical rivet by stamping, and a rivet of acceptable strength can be formed from the material of the strip without providing an increased thickness of metal in the end portion of the lower limb. Therefore an acceptable tamper-proof ear tag can be formed from brass strip having a thickness of 1 mm.

As compared to the tags of Figures 7 - 11, the tag of Figure 12 can be produced more cheaply because there is little waste in the formation of the rivet and yet a rivet of satisfactory strength can be produced. The rivet can be made from a cylindrical blank having a wall thickness of 1 mm.

CLAIMS

1.   A tag comprising a metal strip (1) formed into two limbs (2, 3) and a hollow rivet (5; 65) standing up at the free end of one of the limbs (2), said rivet comprising a stock portion (6; 67) and a head portion (8; 70; 8b) with a weak portion (7; 69; 7b) of reduced wall thickness therebetween, and a receiver hole (17; 74; 17a) through the strip near to the free end of the second of said limbs (3), the receiver hole being of sufficient diameter to receive the head portion of the rivet when the tag is being closed, the head portion (8; 70; 8b) being deformable radially outwardly to a splayed configuration after passage through the receiver hole (17; 74; 17a), and the metal of the strip which defines the receiver hole being a hardened zone (83, 84; 18; 75; 18a) which is adapted to interact with the splayed rivet (5; 65) to cause it to break at the weak portion (7; 69; 7b) if an attempt is made to force the limbs (2, 3) of the tag apart after it has been closed.

2.   A tag according to claim 1, wherein the tag is of relatively soft metal and the hardening of the zone (83, 84; 18; 75; 18a) around the receiver hole (17; 74; 17a) has been effected by working the metal.

3.   A tag according to claim 1 or 2, wherein a zone of the strip surrounding the receiver hole (17) is shaped as a raised annular rim (83) adapted to shelter the splayed head (8) of the rivet in the closed configuration of the tag, the raised rim (83) being provided by deforming and thereby hardening the metal of the strip.

4.   A tag according to any of the preceding claims in which the rivet (5) is formed as a separate component from the strip (1) but has a stock portion (6) of frusto-conical exterior and substantially constant wall thickness, the rivet being secured in a mounting hole (4a) in the strip which is of substantially the same diameter as the external surface of the base of the stock portion of the rivet.

5. A tag according to claim 4, wherein the mounting hole (4a) is defined by a conical wall surface.

6. A tag according to claim 4 or 5, wherein the rivet (5) is secured by deforming the external surface of the rivet to form a retaining lip (10a) which engages the upper surface of the strip (1) around the mounting hole (4a).

7. A tag according to any of the preceding claims, wherein the receiver hole (17; 74; 17a) is defined by an annulus (84; 18; 75; 18a) sloping upwardly in the direction of the closing movement of the tag.

8. A tag according to claim 3, wherein the raised annular rim (83) has a curved apex and on its radially-inward side has a generally S-shaped configuration in cross section, the lower lip of the S-shape being an upwardly-sloping annulus (84) defining the receiver hole (17).

Fig.1.

1/11

0061279

Fig.2.

Fig.4.

Fig.3.

0061279

# Fig.5.

30

31

32

35

33

34  84  8  83

29

# Fig.6.

33

35

34  31  30

4/11

0061279

**Fig.7.**

16  18  14
13  8
7  12
11
5
6
15
17
3
26
27
1
2
26
9  10  4

**Fig.8.**

14  8
13
11
18
12
5
15
6
3
1
9  10  4  2

0061279

## Fig.9.

Fig.10.

Fig.11.

Fig.12.

Fig.13.

Fig.14.

0061279